# EUROPÄISCHE PATENTSCHRIFT

(11) **EP 0 308 642 B1**
(45) Veröffentlichungstag und Bekanntmachung des Hinweises auf die Patenterteilung: **02.03.1994**
(21) Anmeldenummer: 88112906.8
(22) Anmeldetag: 08.08.1988
(51) Int. Cl.: H02H 9/00

(54) **Anordnung zur Anlaufstrombegrenzung eines Gleichspannungswandlers**
Device for limiting the inrush current of a D.C. converter
Dispositif pour limiter le courant de démarrage d'un convertisseur à courant continu

(30) Priorität: 22.09.1987 DE 3731834
(43) Veröffentlichungstag der Anmeldung: 29.03.1989
(73) Patentinhaber: SIEMENS AKTIENGESELLSCHAFT, 80333 München (DE)
(72) Erfinder: Koroncai, Adam, Dipl.-Ing., A-9020 Klagenfurt (AT); Lechner, Alexander, Dr. Dipl.-Ing., A-9583 Faak/See (AT)

(56) Entgegenhaltungen:
- DE-A- 2 247 816
- DE-A- 3 122 835
- DE-A- 3 308 320
- DE-A- 3 421 520
- US-A- 4 492 876
- ELECTRONICS INTERNATIONAL, Band 56, Nr. 23, 17. November 1983, Seite 133, New York, US; J.E. BUCHANAN: "Limiting a filter capacitor's turn-on inrush current"
- EDN ELECTRICAL DESIGN NEWS, Band 30, Nr. 20, September 1985, Seiten 141 - 146, Newton, US; N. O SOKAL: "Circuits eliminate power-supply surge currents"

## Beschreibung

Die Erfindung betrifft eine Anordnung zur Anlaufstrombegrenzung eines Gleichspannungswandlers nach dem Oberbegriff des Patentanspruchs 1.

Gleichspannungswandler sind für einen bestimmten Eingangsspannungsbereich ausgelegt. Die untere Eingangsspannungsgrenze wird durch die minimale Versorgungsspannung der Regelkreise des Gleichspannungswandlers bestimmt, die obere durch die Spannungsfestigkeit der verwendeten Bauelemente. Üblicherweise benötigen Gleichspannungswandler auf der Eingangsseite einen oder mehrere Pufferkondensatoren mit Kapazitätswerten bis in den Millifarad-Bereich, deren Ladestrom durch einen Ladewiderstand begrenzt wird. Das Anlaufen des Gleichspannungswandlers unterhalb eines bestimmten Eingangsspannungswertes wird in der Regel durch eine Überwachungseinrichtung verhindert, die den Gleichspannungswandler erst bei Erreichen einer Schaltschwelle über einen Freigabeeingang einschaltet.

Mit dem Erreichen des minimalen Eingangsspannungswertes und dem Anlaufen des Gleichspannungswandlers wird der Ladewiderstand für den oder die Pufferkondensatoren überbrückt, um die Verlustleistung zu reduzieren. Der Eingangsstrom des Gleichspannungswandlers besitzt andererseits beim Einschalten bei minimaler Eingangsspannung seinen Maximalwert gemäß der Beziehung, daß die benötigte Eingangsleistung des Gleichspannungswandlers gleich dem Produkt aus Spannung und Strom ist. Dabei kann der Fall eintreten, daß die Quelle, d.h. die eingangsseitige Versorgungsschaltung, den geforderten Maximalstrom nicht liefern kann und der Gleichspannungswandler seinen Regelbereich nicht erreicht.

Es ist deshalb wünschenswert, daß die Einschaltschwelle des Gleichspannungswandlers dem Maximalstrom der Quelle angepaßt wird. In vielen Fällen sind jedoch die Kenngrößen der Quelle nicht genau erfaßbar oder werden durch Parameter, wie z.B. Zuleitungswiderstände, stark beeinflußt. So beträgt z.B. in der Telefontechnik der von der Vermittlung gelieferte maximale Strom 50 mA, der zulässige Leitungswiderstand liegt unter 1400 Ohm und die Leitungsspannung liegt im Bereich zwischen 20 und 96 V. Dabei darf eine Leistung von 800 mW nicht überschritten werden.

Eine Minimierung bzw. Optimierung des Einschaltstromes für den Gleichspannungswandler wird nur dann erreicht, wenn der Wandler erst nach dem Erreichen der maximalen bzw. optimalen Eingangsspannung anläuft. Bisher wurde dieses Problem meist umgangen, indem die Kenngrößen der Quelle gemessen und die Einschaltschwelle dann an diese Größen, z.B. als fest eingestellte Einschaltschwelle angepaßt wurde. Integrierte Lösungen sind nicht bekannt.

Aus der DE-A-3308320 ist eine Anordnung mit den Merkmalen des Oberbegriffs des Anspruchs 1 bekannt. Darin steuert ein als Schwellwertschalter ausgebildeter pnp-Transistor einen weiteren pnp-Transistor derart an, daß ein Relais betätigt werden kann, dessen Arbeitskontakte den Ladewiderstand überbrücken und eine Stromversorgung einschalten.

In der Veröffentlichung EDN Electrical Design News, Band 30, Nr. 20, Sept. 1985, Seiten 141 - 146, Newton, US; N.O.SOKAL: "Circuits Eliminate Power-Supply Search Currents" sind Möglichkeiten zur Überbrückung eines Widerstandes angegeben. Unter anderem ist neben einem Relais ein diskreter MOS-FET als Schalter vorgeschlagen, jedoch werden erhebliche Nachteile dieser Maßnahmen beschrieben.

Der Erfindung liegt die Aufgabe zugrunde, eine vorteilhafte alternative Anordnung zur Anlaufstrombegrenzung eines Gleichspannungswandlers anzugeben.

Diese Aufgabe wird erfindungsgemäß durch die Merkmale des Patentanspruchs 1 gelöst.

Ausgestaltungen des Erfindungsgedankens sind in Unteransprüchen gekennzeichnet.

Die Erfindung wird im folgenden anhand zweier Figuren der Zeichnung näher erläutert, in denen gleiche Elemente mit gleichen Bezugszeichen versehen sind. Es zeigt:
- FIG 1: ein schematisches Schaltbild einer bekannten Anordnung und
- FIG 2: ein Schaltbild einer integrierbaren erfindungsgemäßen Anordnung zur Anlaufstrombegrenzung.

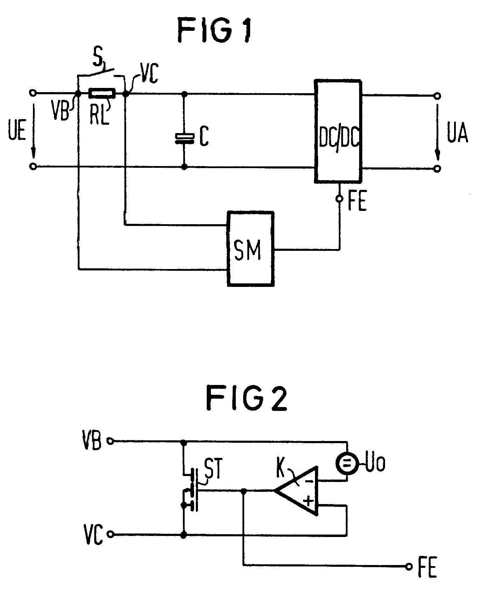

Gemäß der in FIG 1 dargestellten Anordnung ist einem Gleichspannungswandler DC/DC eingangsseitig ein Pufferkondensator C vorgeschaltet, der über einen Ladewiderstand RL zur Begrenzung des Ladestroms mit einer Eingangsspannung UE verbunden ist. Der Ladewiderstand RL liegt mit seinen Anschlußklemmen an den Knotenpunkten VB und VC, an denen auch ein Schalter S zur Überbrückung des Ladewiderstands RL angeschlossen ist. Ebenfalls an den Knotenpunkten VB und VC sind die Eingänge einer integrierbaren Überwachungseinrichtung SM angeschlossen, die ausgangsseitig mit dem Freigabeeingang FE des Gleichspannungswandlers DC/DC verbunden ist. Im eingeschalteten Zustand ist an den Ausgängen des Gleichspannungswandlers DC/DC die Ausgangsspannung UA abgreifbar.

Das Verfahren zur Anlaufstrombegrenzung des Gleichspannungswandlers DC/DC besteht nun darin, daß die Überwachungseinrichtung SM den Strom durch den Ladewiderstand RL mißt und bei Erreichen eines vorgegebenen minimalen bzw. optimalen Stroms als Schaltschwelle den Gleichspannungswandler DC/DC über den Freigabeeingang FE einschaltet. Gemäß dem Ausführungsbeispiel der FIG 1 wird dazu der Spannungsabfall am Ladewiderstand RL gemessen. Sinkt der Spannungsabfall am Ladewiderstand RL unter einen vorgegebenen Wert Uo, z.B. 2 V, so kann der Ladevorgang des Pufferkondensators als abgeschlossen betrachtet werden und die maximale bzw. optimale Eingangsspannung als erreicht angesehen werden. Beim darauffolgenden Einschalten des Gleichspannungswandlers DC/DC ist somit der Einschaltstrom unabhängig von den Kenndaten der Quelle und der Zuleitungsparameter minimiert bzw. optimiert.

FIG 2 zeigt in Verbindung mit FIG 1 ein erfindungsgemäßes Ausführungsbeispiel einer integrierbaren Anlaufstrombegrenzung. Die Knotenpunkte bzw. Klemmen VB und VC, an die der Ladewiderstand RL angeschlossen ist, sind ebenfalls mit der gesteuerten Strecke des als Schalter dienenden Leistungstransistors ST und mit den Eingängen eines Komparators K verbunden. Dabei ist der nichtinvertierende Eingang des Komparators K mit der Klemme VC direkt und der invertierende Eingang des Komparators K über eine die Vorspannung Uo liefernde Gleichspannungsquelle mit der Klemme VB verbunden. Der Ausgang des Komparators K ist an den Steueranschluß des Schalttransistors ST und an die Klemme FE des Freigabeingangs des Gleichspannungswandlers DC/DC angeschlossen. Die dem invertierenden Eingang des Komparators K vorgeschaltete Gleichspannungsquelle Uo liefert eine Vorspannung, die dem Wert entspricht, bei dem der Ladevorgang des Pufferkondensators als abgeschlossen betrachtet werden kann. Der Komparator K mißt den Spannungsabfall am Ladewiderstand RL, der zwischen den Klemmen VB und VC angeschlossen ist. Sinkt dieser Spannungsabfall während der Ladephase des Pufferkondensators auf den Spannungswert Uo ab, so wird der Ladewiderstand RL durch den Schalttransistor ST überbrückt und ein Freigabesignal an den Gleichspannungswandler DC/DC abgegeben.

Mit den erfindungsgemäßen Maßnahmen wird es möglich, den Gleichspannungswandler DC/DC unabhängig von den nicht bekannten Kenngrößen der Quelle und den Zuleitungsparametern dann einzuschalten und den Ladewiderstand RL für den oder die Pufferkondensatoren dann zu überbrücken, wenn der Ladevorgang für diesen oder diese Pufferkondensatoren entweder völlig oder nahezu abgeschlossen ist, so daß dann der Einschaltstrom des Gleichspannungswandlers DC/DC minimal bzw. optimiert ist. Die Schaltung gemäß FIG 2 besitzt dabei den Vorteil, monolithisch integrierbar zu sein.

## Patentansprüche

1. Anordnung zur Anlaufstrombegrenzung eines Gleichspannungswandlers (DC/DC), dem wenigstens ein an einer Versorgungsleitung mit bis zum Eingang des Gleichspannungswandlers durchgehendem Potential angeschlossener Pufferkondensator (C) und ein in einer positiven Versorgungsleitung angeordneter Ladewiderstand (RL) vorgeschaltet sind, mit einer Überwachungseinrichtung (SM, K), die bei Erreichen einer Schaltschwelle (Uo) den Gleichspannungswandler (DC/DC) einschaltet und den Ladewiderstand (RL) überbrückt, **dadurch gekennzeichnet,** daß die Überwachungseinrichtung (SM, K) einen Komparator (K) enthält, dessen einer Eingang über eine Vorspannungsquelle (Uo) an eine Anschlußklemme (VB) des Ladewiderstandes (RL) und dessen anderer Eingang an der anderen Anschlußklemme (VC) des Ladewiderstands (RL) angeschlossen ist und der ausgangsseitig unmittelbar einen n-Kanal-MOS-Transistor (ST) ansteuert, der mit seinem Ausgangskreis parallel zum Ladewiderstand (RL) liegt, und der einen Freigabeanschluß (FE) des Gleichspannungswandlers (DC/DC) ansteuert, wobei die Anordnung als integrierte Schaltung ausgeführt ist.

## Claims

1. Arrangement for limiting the starting current of a DC/DC voltage converter (DC/DC) upstream of which there is connected at least one buffer capacitor (C), which is connected to a supply line having a potential which is continuous to the input of the DC/DC voltage converter, and a charging resistor (RL) which is arranged in a positive supply line, having a monitoring device (SM, K) which switches the DC/DC voltage converter (DC/DC) on on reaching a switching threshold (Uo) and bridges the charging resistor (RL), characterized in that the monitoring device (SM, K) contains a comparator (K) one of whose inputs is connected via a bias voltage source (Uo) to one connecting terminal (VB) of the charging resistor (RL) and whose other input is connected to the other connecting terminal (VC) of the charging resistor (RL) and which, on the output side, directly drives an n-channel MOS transistor (ST) whose output circuit is connected in parallel with the charging resistor (RL) and which drives an enable connection (FE) of the DC/DC voltage converter (DC/DC), the arrangement being designed as an integrated circuit.

## Revendications

1. Dispositif pour limiter le courant de démarrage d'un convertisseur continu-continu (DC/DC), en amont duquel sont branchés au moins un condensateur tampon (C), qui est raccordé à une ligne d'alimentation possédant un potentiel continu jusqu'à l'entrée dans le convertisseur continu-continu, et une résistance de charge (RL) disposée dans une ligne d'alimentation positive, et comportant un dispositif de contrôle (SM, K), qui, lorsqu'un seuil de commutation (Uo) est atteint, active le convertisseur continu-continu (DC/DC) et shunte la résistance de charge (RN), caractérisé par le fait que le dispositif de contrôle (SM, K) comporte un comparateur (K), dont une entrée est raccordée, par l'intermédiaire d'une source de tension de polarisation (Uo), à une borne de raccordement (VB) de la résistance de charge (RL) et dont l'autre entrée est raccordée à l'autre borne de raccordement (VC) de la résistance de charge (RL), et qui commande directement, côté sortie, un transistor MOS (ST) à canal n, dont le circuit de sortie est branché en parallèle avec la résistance de charge (RL) et qui commande une borne de libération (FE) du convertisseur continu-continu (DC/DC), le dispositif étant réalisé sous la forme d'un circuit intégré.
